(19) Europäisches Patentamt
European Patent Office
Office européen des brevets

(11) Veröffentlichungsnummer: **0 099 519**
**B1**

(12) **EUROPÄISCHE PATENTSCHRIFT**

(45) Veröffentlichungstag der Patentschrift: **17.09.86**

(51) Int. Cl.⁴: **C 08 G 18/42**, C 08 G 18/48, C 08 G 18/75, C 08 G 18/10, C 08 G 18/34

(21) Anmeldenummer: **83106636.0**

(22) Anmeldetag: **07.07.83**

# (54) Verfahren zur Herstellung von Kunststoffen auf Polyisocyanat-Basis.

(30) Priorität: **20.07.82 DE 3227017**

(43) Veröffentlichungstag der Anmeldung: **01.02.84 Patentblatt 84/5**

(45) Bekanntmachung des Hinweises auf die Patenterteilung: **17.09.86 Patentblatt 86/38**

(84) Benannte Vertragsstaaten: **BE DE FR GB IT NL**

(56) Entgegenhaltungen:
**EP - A - 0 000 171**
**DE - A - 1 949 165**

**K.B.ONDER et al. Polym. Prep. Amer. Chem. Soc. Div. Polym. Chem. 21 (1980), 132-133**

(73) Patentinhaber: **BAYER AG, Konzernverwaltung RP Patentabteilung, D-5090 Leverkusen 1 Bayerwerk (DE)**

(72) Erfinder: **Reiff, Helmut, Dr., Walter-Flex-Strasse 16, D-5090 Leverkusen 1 (DE)**
Erfinder: **Dieterich, Dieter, Dr., Ludwig-Girtler-Strasse 1, D-5090 Leverkusen 1 (DE)**

**EP 0 099 519 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Herstellung von, im wesentlichen Urethangruppen-freien, Kunststoffen auf Polyisocyanat-Basis durch Umsetzung von aliphatischen bzw. cycloaliphatischen Polyisocyanaten mit, im wesentlichen Hydroxylgruppen- und Urethangruppen-freien, Verbindungen mit gegenüber Isocyanatgruppen reaktionsfähigen Gruppen zu den entsprechenden, Isocyanatgruppen aufweisenden Voraddukten und deren anschliessende Kettenverlängerung mit Wasser, Polyaminen oder Hydrazinen.

Die im Prinzip bekannte, zu Amidgruppen führende Reaktion zwischen Carboxyl- und Isocyanatgruppen wurde bislang, von der Herstellung hochmolekularer thermoplastischer Copolyamide abgesehen (vgl. z.B. K.B. Onder et al., Polym. Prep. Amer. Chem. Soc. Div. Polym. Chem. 21 (1980), 132 ff.), grosstechnisch noch nicht zur Herstellung von Kunststoffen auf Polyisocyanat-Basis genutzt. Der Grund hierfür dürfte in der geringen Reaktivität von Carboxylgruppen gegenüber Isocyanatgruppen zu sehen sein, welche zur Folge hat, dass bei der Umsetzung von Carboxylgruppen aufweisenden Verbindungen mit Polyisocyanaten stets, zu unerwünschten Verquallungen der Reaktionsansätze führende, Nebenreaktionen ablaufen. So erhält man beispielsweise bei der Umsetzung von Carboxylgruppen aufweisenden Polyestern mit den üblichen Polyisocyanaten wie z.B. Toluylendiisocyanat, in der Schmelze lange vor der theoretisch zu erwartenden Kohlendioxidabspaltung hochvernetzte und völlig unlösliche Produkte.

Die EP-A-0 000 171 beschreibt zwar im allgemeinen Teil der Offenbarung ein Verfahren zur Herstellung von Carboxylat-, Amid- und gegebenenfalls Urethangruppen aufweisenden Polyisocyanat-Polyadditionsprodukten, bei welchem man eine Hydroxylkomponente mit intramolekularen Tri- oder Tetracarbonsäuremonoanhydriden unter Ringöffnung der Anhydridgruppe zu Carboxyl- und gegebenenfalls Hydroxylgruppen aufweisenden Verbindungen umsetzt, diese unter Bildung von eingebauten Carboxylatgruppen teilneutralisiert, anschliessend mit einem Überschuss an organischen Polyisocyanaten zu einem NCO-Prepolymeren umsetzt, welches schliesslich einer Kettenverlängerungsreaktion unterzogen wird. Die diesem vorveröffentlichten Verfahren zugrundeliegende Aufgabe bestand darin, einen einfachen Weg zur Herstellung von wässrigen Dispersionen von Carboxylatgruppen aufweisenden Polyurethanen zu weisen. Tatsächlich wurden von den Autoren der Vorveröffentlichung, wie den Ausführungsbeispielen zu entnehmen, bezogen auf die Hydroxylgruppen der Polyolkomponente stets stark unterschüssige Mengen an Polycarbonsäureanhydrid eingesetzt, so dass die Zwischenprodukte immer eine hohe Konzentration an Hydroxylgruppen neben vergleichsweise geringen Mengen an Carboxylgruppen aufweisen, die dann noch, wie ausgeführt, teilneutralisiert werden. Konkret beschrieben werden demzufolge Endprodukte, die neben Urethangruppen allenfalls eine vergleichsweise geringe Menge an Amidgruppen aufweisen können. Das Verfahren der Vorveröffentlichung unterscheidet sich im übrigen vom nachstehend näher beschriebenen erfindungsgemässen Verfahren durch den Umstand, dass beim erfindungsgemässen Verfahren als wesentliche Aufbaukomponente a) Carboxylgruppen jedoch keine Carboxylatgruppen aufweisenden Verbindungen zum Einsatz gelangen.

Da Amidgruppen thermostabiler als Urethangruppen sind, so dass davon ausgegangen werden könnte, dass, unter Verwendung von Carboxylgruppen aufweisenden Reaktionspartnern hergestellte, Kunststoffe auf Polyisocyanat-Basis eine im Vergleich zu den klassischen Polyurethanen erhöhte Stabilität gegenüber Temperatureinflüssen aufweisen, bestand die der Erfindung zugrundeliegende Aufgabe darin, einen Weg zu derartigen Kunststoffen auf Polyisocyanat-Basis zu weisen, der ihre Herstellung in praktisch Nebenprodukt-freier Form gestattet. Die der Erfindung zugrundeliegende Aufgabe unterscheidet sich somit grundsätzlich von der genannten, dem Verfahren der EP-A-0 000 171 zugrundeliegende Aufgabe. Da es sich bei den erfindungsgemässen Reaktionspartnern a) für die Polyisocyanate um Carboxylatgruppen-freie Polycarboxylverbindungen handelt, die im wesentlichen keine Hydroxylgruppen aufweisen, unterscheidet sich das nachstehend näher beschriebene erfindungsgemässe Verfahren auch bezüglich des Lösungswegs vom Verfahren der zitierten Vorveröffentlichung.

Gegenstand der Erfindung ist ein Verfahren zur Herstellung von Kunststoffen auf Polyisocyanat-Basis nach dem Prepolymerverfahren durch Umsetzung von

a) mindestens zwei endständige, gegenüber Isocyanatgruppen reaktionsfähige Gruppen aufweisenden Verbindungen des Molekulargewichtsbereichs 146 bis 10 000 mit

b) überschüssigen Mengen an organischen Polyisocyanaten zu den entsprechenden Isocyanatgruppen aufweisenden Voraddukten und deren anschliessende Umsetzung mit

c) Kettenverlängerungsmitteln, wobei die Herstellung der Voraddukte gegebenenfalls unter Mitverwendung von

d) bis zu 10 Äquivalentprozent, bezogen auf die in der Komponente a) vorliegenden, gegenüber Isocyanatgruppen reaktionsfähigen Gruppen, an, im Sinne der Isocyanat-Additionsreaktion monofunktionellen, Verbindungen erfolgt, dadurch gekennzeichnet, dass man

als Aufbaukomponente a) im wesentlichen Hydroxylgruppen-freie, mindestens zwei endständige Carboxylgruppen und gegebenenfalls Ether- und/oder Estergruppen aufweisende Verbindungen,

als Aufbaukomponente b) mindestens einen Cyclohexanring aufweisende nicht-aromatische Polyisocyanate mit ausschliesslich aliphatisch und/oder cycloaliphatisch gebundenen Isocyanatgruppen und

als Aufbaukomponente c) Wasser und/oder Polyamine mit mindestens zwei primären und/oder sekundären Aminogruppen und/oder Hydrazine mit mindestens zwei primären und/oder sekundären Aminogruppen verwendet.

Bei der beim erfindungsgemässen Verfahren einzusetzenden Aufbaukomponente a) handelt es sich um, im wesentlichen Hydroxylgruppen-freie, gegebenenfalls Ether- und/oder Estergruppen aufweisende und gegebenenfalls als Gemisch vorliegende organische Verbindungen des (aus dem Endgruppengehalt berechenbaren) (mittleren) Molekulargewicht 146–10 000, vorzugsweise 500–4000 und besonders bevorzugt 1000–3500, welche mindestens 2, vorzugsweise 2–3 und insbesondere 2 endständige Carboxylgruppen aufweisen. «Hydroxylgruppen-frei» bedeutet in diesem Zusammenhang, dass in diesen Verbindungen pro 100 Carboxylgruppen max. 10, vorzugsweise max. 5, Hydroxylgruppen vorliegen.

Es handelt sich bei den als Aufbaukomponente a) geeigneten Verbindungen vorzugsweise entweder um einfache Polycarbonsäuren eines Molekulargewichts von mindestens 146 der nachstehend als Aufbakomponenten für die Herstellung von Carboxylgruppen aufweisenden Polyestern beispielhaft genannten Art oder um endständige Carboxylgruppen aufweisende Polyester, Polyether, Polyacetale oder Polyamide. Besonders bevorzugt werden als Aufbaukomponente a) endständige Carboxylgruppen aufweisende Polyester oder Polyether eingesetzt. Selbstverständlich können beim erfindungsgemässen Verfahren auch beliebige Gemische verschiedener, der genannten Definition entsprechender, Verbindungen eingesetzt werden.

Bei den Carboxylgruppen aufweisenden Polyestern handelt es sich z.B. um die an sich bekannten Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester mit Carboxylendgruppen verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester, Terephthalsäure-bis-glykolester. Als mehrwertige Alkohole kommen z.B. Ethylenglykol, Propylenglykol-(1,2) und -(1,3), Butylenglykol-(1,4) und -(2,3), Hexandiol-(1,6), Octandiol-(1,8), Neopentylglykol, Cyclohexandimethanol- (1,4-Bis-hydroxymethylcyclohexan), 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Methylglykosid, ferner Diethylenglykol, Triethylenglykol, Tetraethylenglykol, Polyethylenglykol, Dipropylenglykol, Polypropylenglykol, Dibutylenglykol und Polybutylenglykole in Frage.

Geeignete Polyether mit endständigen Carboxylgruppen können beispielsweise durch Umsetzung der aus der Polyurethanchemie an sich bekannten Polyetherpolyole mit Dicarbonsäuren bzw. Dicarbonsäureanhydriden der vorstehend beispielhaft genannten Art erhalten werden. Hierfür geeignete Polyetherpolyole sind beispielsweise die Anlagerungsprodukte von Alkylenoxiden wie beispielsweise von Ethylenoxid und/oder Propylenoxid an geeignete Startermoleküle wie z.B. Wasser, Ethylenglykol, Propylenglykol, Trimethylolpropan und/oder Glycerin.

Grundsätzlich können als Aufbaukomponente a) beliebige, obiger Definition entsprechende, freie Carboxylgruppen aufweisende Umsetzungsprodukte von Dicarbonsäuren bzw. Dicarbonsäureanhydriden der beispielhaft genannten Art mit den aus der Polyurethanchemie bekannten Verbindungen mit gegenüber Isocyanatgruppen reaktionsfähigen Gruppen, d.h. insbesondere Hydroxyl- oder Aminogruppen Verwendung finden. Zu diesen Umsetzungsprodukten gehören beispielsweise die Derivate von vorab hergestellten Polyesterpolyolen, Polycarbonatdiolen, Polycaprolactondiolen, Polyacetal-diolen, Aminogruppen aufweisenden Polyesteramiden oder Polyamiden.

Die Überführung der Hydroxyl- oder Aminogruppen aufweisenden Vorprodukte in die entsprechenden Verbindungen mit endständigen Carboxylgruppen durch Umsetzung mit Dicarbonsäuren oder Dicarbonsäureanhydriden erfolgt im allgemeinen innerhalb des Temperaturbereiches von 80 bis 150 °C. Vorzugsweise werden die beispielhaft genannten Dicarbonsäureanhydride für die Modifizierungsreaktion eingesetzt. Diese Umsetzung kann gewünschtenfalls mit Basen oder tertiären Aminen katalysiert werden.

Es ist auch möglich, als Aufbaukomponente a) Sulfonatgruppen aufweisende Verbindungen mit endständigen Carboxylgruppen einzusetzen. Derartige Verbindungen können beispielsweise durch Umsetzung der in US-PS 4 108 814 beschriebenen Sulfonatdiole mit Dicarbonsäureanhydriden der beispielhaft genannten Art erhalten werden. Es ist ferner möglich, als Aufbaukomponente a) nicht-ionisch-hydrophil modifizierte, endständige Carboxylgruppen aufweisende Verbindungen einzusetzen, wie sie beispielsweise durch Umsetzung der beispielhaft offenbarten Dicarbonsäuredianhydride mit, Ethylenoxideinheiten aufweisenden Seitenketten tragenden Diolen der in US-PS 3 905 929 oder US-PS

4 190 566 genannten Art, erhalten werden können.

Die Mitverwendung derartiger mit Sulfonatgruppen oder nicht-ionisch-hydrophil modifizierter Aufbaukomponenten a) erfolgt insbesondere bei der Herstellung von wässrigen Dispersionen der erfindungsgemässen Verfahrensprodukte. Grundsätzlich ist es auch möglich zur hydrophilen Modifizierung der erfindungsgemässen Verfahrensprodukte die beispielhaft genannten, nicht mit Dicarbonsäureanhydriden modifizierten, Hydroxylgruppen aufweisenden hydrophilen Aufbaukomponenten mitzuverwenden, vorausgesetzt, dass der Gesamtgehalt der Komponente a) an Hydroxylgruppen der o.g. Definition entspricht.

Bei der Aufbaukomponente b) handelt es sich um, mindestens einen Cyclohexanring aufweisende nicht-aromatische Polyisocyanate mit ausschliesslich aliphatisch und/oder cycloaliphatisch gebundenen Isocyanatgruppen. Vorzugsweise werden Diisocyanate mit mindestens einer und besonders bevorzugt mit zwei cycloaliphatisch gebundenen Isocyanatgruppen eingesetzt.

Beispielsweise sind folgende Polyisocyanate als erfindungsgemäss einzusetzende Aufbaukomponente b) geeignet: perhydrierte Xylylendiisocyanate, gegebenenfalls als Isomerengemische vorliegende Diisocyanatomethyl-tricyclodecane, 1-Isocyanato-3,3,5-trimethyl- 5-isocyanatomethyl-cyclohexan (IPDI), 4,4'-Diisocyanato-dicyclohexylmethan, 4,4'-Diisocyanato-dicyclohexylpropan(2,2), oder die als Isomeren- bzw. Homologengemische vorliegenden Phosgenierungsprodukte von perhydrierten Anilin/Formaldehyd-Kondensaten. Ferner können beliebige Biuret- oder Isocyanuratgruppen aufweisende Polyisocyanate auf Basis der beispielhaft genannten einfachen aliphatischen bzw. cycloaliphatischen Diisocyanate eingesetzt werden.

Als Aufbaukomponente c), d.h. als Kettenverlängerungsmittel kommen bei der Durchführung des erfindungsgemässen Verfahrens neben Wasser insbesondere mindestens zwei primäre und/oder sekundäre Aminogruppen aufweisende Polyamine, vorzugsweise Diamine und/oder zwei primäre und/oder sekundäre Aminogruppen aufweisende Hydrazine in Betracht.

Geeignete Aufbaukomponenten c) sind insbesondere Verbindungen der Formel

$$(A)_n(NHB)_2$$

in der

A für einen gesättigten aliphatischen Kohlenwasserstoffrest mit 2 bis 12, vorzugsweise 2 bis 6, Kohlenstoffatomen, einen gesättigten cycloaliphatischen Kohlenwasserstoffrest mit 4 bis 15, vorzugsweise 6 bis 10, Kohlenstoffatomen, einen aromatischen Kohlenwasserstoffrest mit 6 bis 15, vorzugsweise 6 bis 13, Kohlenstoffatomen oder einen araliphatischen Kohlenwasserstoffrest mit 7 bis 13 Kohlenstoffatomen steht, wobei zwischen den beiden Aminogruppen mindestens zwei Kohlenstoffatome angeordnet sind,

B für Wasserstoff oder einen Alkylrest mit 1 bis 18 Kohlenstoffatomen, vorzugsweise für Wasserstoff, steht, und

n für 0 oder 1 steht.

Beispiele geeigneter Aufbaukomponenten c) sind Ethylendiamin, 1,2-Propylendiamin, 1,3-Propylendiamin, Hexamethylendiamin, 1-Amino-3,3,5-trimethyl-aminomethylcyclohexan (IPDA), 1,4-Diaminocyclohexan, 4,4'-Diaminodicyclohexylmethan, 2,4- und 2,6-Toluylendiamin und deren Gemische oder 4,4'-Diaminodiphenylmethan, bzw. beliebige Gemische derartiger Amine; N-Methyl-diethylentriamin, Hydrazin, Methylhydrazin, Dodecylhydrazin, N,N'-Dimethylhydrazin bzw. die Hydrate derartiger Hydrazine.

Insbesondere bei der Herstellung von wässrigen Dispersionen von Kunststoffen auf Polyisocyanat-Basis nach dem erfindungsgemässen Verfahren können als Aufbaukomponente c) auch ionische Zentren aufweisende Diamine, beispielsweise die in DE-OS 2 035 732 beschriebenen N-(ω-Aminoalkan)- ω'-aminoalkansulfonsäuresalze eingesetzt werden.

Bei der Herstellung von wässrigen Dispersionen von Kunststoffen auf Polyisocyanat-Basis nach dem erfindungsgemässen Verfahren ist es auch oft zweckmässig, als Aufbaukomponente c) Diamine oder Hydrazine mit mindestens einer reversibel blockierten Aminogruppe einzusetzen. Es handelt sich hierbei um Verbindungen ausgewählt aus der Gruppe bestehend aus Ketiminen, Ketazinen, Oxazolidinen, Aldazinen, Aldiminen und Kohlensäuresalzen. Aus derartigen Verbindungen entstehen unter dem hydrolytischen Einfluss von Wasser die ihnen zugrundeliegenden Amine bzw. Hydrazine. Die Herstellung von wässrigen Dispersionen von Kunststoffen auf Polyisocyanat-Basis unter Verwendung derartiger blockierter Kettenverlängerungsmittel ist beispielsweise in den US-Patenten 4 192 937, 4 269 748 und 4 292 226 bzw. in der DE-OS 2 725 589 beschrieben. Besonders bevorzugte Aufbaukomponenten c) mit zumindest teilweise blockierten Aminogruppen sind die in DE-OS 2 725 589 beschriebenen Ketimine und die in US-PS 4 269 748 beschriebenen Azine. Bei der Durchführung des erfindungsgemässen Verfahrens unter Verwendung dieser speziellen Kettenverlängerungsmittel entsprechend den in den genannten Veröffentlichungen offenbarten Methoden ist es allein wesentlich, dass mindestens 50%, vorzugsweise mehr als 85%, der in der Amin- bzw. Hydrazinkomponente vorliegenden Aminogruppen in blockierter Form vorliegen und dass dementsprechend die Amine im statistischen Mittel max. 1 Mol freie Aminogruppen, vorzugsweise max. 0,30 Mol freie Aminogruppen pro Mol Polyamin, vorzugsweise Diamin, aufweisen.

Beispiele für blockierte Kettenverlängerungsmittel der genannten Art sind Acetonhydrazon, Acetonazin, das Bis-Ketimin aus IPDA und Aceton, die homologen Verbindungen auf Basis von Methylethylketon oder von Methylisobutylketon oder Acetaldazin. Die genannten Bis-Ketimine

des IPDI, sowie Acetonhydrazon bzw. Acetonazin sind die bevorzugten Aufbaukomponenten c) mit blockierten Aminogruppen.

Bei der Durchführung des erfindungsgemässen Verfahrens wird in einer ersten Stufe zunächst aus der Aufbaukomponente a) und der Aufbaukomponente b) ein Isocyanatgruppen aufweisendes Prepolymer hergestellt. Hierbei kommen die Reaktionspartner im allgemeinen in, einem Äquivalentverhältnis von Isocyanatgruppen zu gegenüber Isocyanatgruppen reaktionsfähigen Gruppen (insbesondere Carboxylgruppen) von 1,2:1 bis 3:1, vorzugsweise 1,4:1 bis 3:1 entsprechenden Mengen zum Einsatz.

Die Umsetzung der Reaktionspartner erfolgt vorzugsweise in Substanz, dergestalt, dass man die Reaktionspartner bei 20–120 °C miteinander vermischt und möglichst schnell auf eine Temperatur von 130 °C bis 200 °C, vorzugsweise 140 °C bis 170 °C, erhitzt und bei dieser Temperatur bis zur Beendigung der Kohlendioxidabspaltung umsetzt. Die Reaktion kann unter Intergas wie Stickstoff, und/oder in Gegenwart eines Katalysators, erfolgen.

Beispiele geeigneter Katalysatoren sind insbesondere tertiäre Amine, Alkoholate oder Phenolate und organometallische Verbindungen wie z.B. Lithiummethylat, Natriummethylat, Kaliummethylat, Lithium-tert.-butylat, Natrium-tert.-butylat, Kalium-tert.-butylat, Natriumphenolat, Lithiumacetat, Natriumacetat, Kaliumacetat, die Alkalialkoholate des 2-Ethyl-hexanols, die Alkalisalze der 2-Ethyl-hexansäure. Weiter seien genannt: Blei-oktoat, Zinn-oktoat, Nickel-oleat, Nickel-acetyl-acetonat, Dibutyl-zinn-dilaurat, Triethylamin oder Triethylendiamin.

Die Katalysatoren können gegebenenfalls nach erfolgter Reaktion desaktiviert werden. Dazu werden die Reaktionsprodukte mit 100–1000 ppm neutralisierender oder acylierender oder alkylierender Substanzen versetzt. Solche Substanzen sind beispielsweise Chlorwasserstoff, Benzoylchlorid, Ethyljodid, Dimethylsulfat, Schwefel oder Komplexbildner.

Grundsätzlich kann die Herstellung der NCO-Prepolymeren auch in Gegenwart von inerten, hochsiedenden Lösungsmitteln erfolgen. Solche Lösungsmittel sind beispielsweise Sulfolan, Dimethylformamid, N-Methyl-pyrrolidon, Diphenylether oder Diphenylsulfon. Im Anschluss an ihre Herstellung können die NCO-Prepolymeren vor ihrer weiteren Umsetzung mit beliebigen inerten Lösungsmitteln verdünnt werden, deren Siedepunkt nunmehr unkritisch ist. Hierfür geeignete Lösungsmittel sind neben den bereits o.g. insbesondere Aceton, Methylethylketon, Tetrahydrofuran, Dioxan, Ethylacetat oder Toluol.

Bei einer speziellen Variante des erfindungsgemässen Verfahrens, insbesondere bei der Herstellung von wässrigen Dispersionen von Kunststoffen auf Polyisocyanat-Basis nach dem erfindungsgemässen Verfahren, kann es zweckmässig sein, bei der Herstellung der NCO-Prepolymeren eine weitere Ausgangskomponente d) mitzuverwenden. Bei dieser speziellen Aufbaukomponente d), die vorzugsweise im Gemisch mit der Aufbaukomponente a) zum Einsatz gelangt, handelt es sich um im Sinne der Isocyanat-Additionsreaktion monofunktionelle Reaktionspartner des Molekulargewichtsbereichs 500 bis 4000, vorzugsweise 800 bis 2500. Bei der gegenüber Isocyanatgruppen reaktionsfähigen Gruppe der Aufbaukomponente d) handelt es sich im allgemeinen um Hydroxyl- oder vorzugsweise um Carboxylgruppen. Bevorzugte Aufbaukomponenten d) stellen Ethylenoxideinheiten und gegebenenfalls zusätzlich Propylenoxideinheiten aufweisende, einwertige Polyetheralkohole oder deren, Carboxylgruppen aufweisende Umsetzungsprodukte mit Dicarbonsäureanhydriden der oben beispielhaft genannten Art dar. Diese Aufbaukomponenten d) weisen im allgemeinen einen Gehalt an Ethylenoxid-Struktureinheiten von mindestens 50, vorzugsweise mindestens 80, Gew.-% auf. Ihre Herstellung erfolgt durch Alkoxylierung, vorzugsweise Ethoxylierung, von monofunktionellen Startermolekülen wie z.B. Ethanol oder n-Butanol, worauf sich gegebenenfalls die bereits genannte Modifizierungsreaktion mit Dicarbonsäureanhydrid anschliesst.

Falls bei der Herstellung der NCO-Prepolymeren derartige Aufbaukomponenten d) mitverwendet werden, liegt ihr Anteil, bezogen auf die Summe der Komponenten a) und b), bei max. 15, vorzugsweise bei max. 10 Gew.-%. Die Verwendung von Hydroxylgruppen aufweisenden Aufbaukomponenten d) ist insbesondere unter der Voraussetzung möglich, dass die Gesamtmenge der im Gemisch aus Komponenten a) und d) vorliegenden Hydroxylgruppen max. 10%, vorzugsweise max. 5%, aller in diesem Gemisch vorliegenden, gegenüber Isocyanatgruppen reaktionsfähigen Gruppen beträgt. Bei der Mitverwendung der Aufbaukomponente d) bei der Herstellung der NCO-Prepolymeren muss natürlich die Menge des Polyisocyanats (Aufbaukomponente b) ) entsprechend erhöht werden, so dass die oben gemachten Bedingungen bezüglich des Äquivalentverhältnisses von Isocyanatgruppen zu gegenüber Isocyanatgruppen reaktionsfähigen Gruppen erfüllt bleibt. Gegebenenfalls kann es zweckmässig sein, die kettenabbrechende Wirkung der monofunktionellen Aufbaukomponente d) durch Mitverwendung einer entsprechenden Menge an mindestens trifunktionellen Aufbaukomponenten a) und/oder b) und/oder c) zu kompensieren.

In der zweiten Stufe des erfindungsgemässen Verfahrens erfolgt die Umsetzung der aus den Komponenten a), b) und gegebenenfalls d) hergestellten NCO-Prepolymeren mit dem Kettenverlängerungsmittel c).

Von der Verwendung von hohen Überschüssen an Wasser bei dessen Verwendung als Kettenverlängerungsmittel bei der Herstellung von wässrigen Dispersionen der Kunststoffe auf Polyisocyanat-Basis abgesehen, kommen die Kettenverlängerungsmittel im allgemeinen in solchen Mengen zum Einsatz, dass für jedes Mol an Isocyanatgruppen des Prepolymeren 0,5 bis 1,5, vorzugsweise 0,7 bis 1,1 und insbesondere ca. 1 Grammäquivalente an, gegebenenfalls teilweise reversibel blockierten, Aminogruppen des Kettenverlängerungsmittels c) zur Verfügung stehen. Bei der Verwendung von Wasser als Kettenverlängerungsmittel bei der Herstellung von nicht-dispergierten Kunststoffen auf Polyisocyanat-Basis kommen entsprechende Wassermengen zum Einsatz, wobei Wasser als difunktionelles Kettenverlängerungsmittel angesehen werden kann. Bei der Herstellung von wässrigen Dispersionen von Kunststoffen auf Polyisocyanat-Basis unter gleichzeitiger Verwendung von Wasser und, gegebenenfalls teilweise blockierten, aminischen bzw. hydrazinischen Kettenverlängerungsmitteln bleibt die Wassermenge bei der Berechnung der Menge der aminischen bzw. hydrazinischen Kettenverlängerungsmittel ausser Betracht.

Im Falle der Verwendung von Wasser als Kettenverlängerungsmittel c) ist auch eine Ausführungsform des erfindungsgemässen Verfahrens denkbar, gemäss welcher die Kettenverlängerungsreaktion des NCO-Prepolymeren unter dem Einfluss von Luftfeuchtigkeit erfolgt. Gemäss dieser Ausführungsform des erfindungsgemässen Verfahrens werden die NCO-Gruppen aufweisenden Prepolymeren, gegebenenfalls nach «Vorverlängerung» mit unterschüssigen Mengen an aminischen bzw. hydrazinischen Kettenverlängerungsmitteln mit ausschliesslich freien Aminogruppen als feuchtigkeitshärtbare Einkomponentensysteme verarbeitet. Hierbei erfolgt beispielsweise die Kettenverlängerungsreaktion nach Verarbeiten der, gegebenenfalls vorverlängerten, NCO-Prepolymeren als Beschichtungsmittel für beliebige Substrate auf dem beschichteten Substrat unter dem Einfluss von Luftfeuchtigkeit, wobei besonders thermostabile Beschichtungen erhalten werden. Bei dieser Ausführungsform des erfindungsgemässen Verfahrens können die, gegebenenfalls vorverlängerten, NCO-Prepolymeren vor ihrer Verarbeitung selbstverständlich mit allen beliebigen in der Beschichtungstechnologie üblichen Hilfs- und Zusatzmitteln, wie z.B. Lacklösungsmitteln, Pigmenten, Verlaufshilfsmitteln, Füllstoffen o.dgl. versehen werden.

Bei der Umsetzung der NCO-Prepolymeren mit Wasser und/oder aminischen bzw. hydrazinischen Kettenverlängerungsmitteln der beispielhaft genannten Art innerhalb der o.g. Bereiche, insbesondere bei der stöchiometrischen Umsetzung der NCO-Prepolymeren mit den Kettenverlängerungsmitteln c) entstehen wertvolle, im wesentlichen Urethangruppen-freie Kunststoffe auf Polyisocyanat-Basis, deren mechanischen Eigenschaften durch geeignete Wahl der Art und insbesondere Funktionalität der Ausgangsmaterialien in weiten Bereichen variiert werden können. Die Umsetzung der NCO-Prepolymeren mit den Kettenverlängerungsmitteln kann lösungsmittelfrei oder auch in Gegenwart von Lösungsmitteln der bereits oben beispielhaft genannten Art erfolgen. So eignet sich das erfindungsgemässe Verfahren beispielsweise sehr gut zur Herstellung von physikalisch trocknenden Lacklösungen, wobei man, im wesentlichen aus linearen Ausgangsmaterialien a) und b), hergestellte NCO-Prepolymere, denen man gegebenenfalls geringe Mengen an monofunktionellen Isocyanaten wie z.B. Stearylisocyanat, zwecks kontrolliertem Kettenabbruch einverleibt, in Lacklösungsmitteln der oben beispielhaft genannten Art mit vorzugsweise stöchiometrischen Mengen an Kettenverlängerungsmittel c) zur Reaktion bringt.

Gemäss einer bevorzugten Ausführungsform des erfindungsgemässen Verfahrens werden wässrige Dispersionen der Kunststoffe auf Polyisocyanat-Basis hergestellt. Hierzu werden bei der Durchführung des erfindungsgemässen Verfahrens vorzugsweise ionische Zentren und/oder nicht-ionisch-hydrophile Gruppierungen aufweisende Aufbaukomponenten a), c) und/oder d) der beispielhaft genannten Art in einer, die Dispergierbarkeit der Isocyanat-Polyadditionsprodukte gewährleistenden Menge mitverwendet. Ausserdem erfolgt entweder die Kettenverlängerungsreaktion der NCO-Prepolymeren in wässrigem Milieu, d.h. in einem hohen Überschuss, bezogen auf die Isocyanatgruppen des Prepolymeren, an Wasser, oder eine Überführung der in Abwesenheit überschüssiger Wassermengen hergestellten Kunststoffe auf Polyisocyanat-Basis in eine wässrige Dispersion im Anschluss an ihre Herstellung.

Im allgemeinen werden bei der Herstellung von wässrigen Dispersionen die genannten hydrophilen Aufbaukomponenten in einer solchen Menge eingesetzt, dass die letztendlich in Wasser dispergiert vorliegenden Kunststoffe auf Polyisocyanat-Basis einen Gehalt an ionischen Zentren, insbesondere Sulfonatgruppen, von 0 bis 45 Milliäquivalenten pro 100 g Feststoff und/oder einen Gehalt an, innerhalb von Polyetherketten angeordneten, Ethylenoxideinheiten von 0 bis 30, vorzugsweise 0 bis 20, Gew.-% aufweisen, wobei selbstverständlich eine dieser Kennzahlen von 0 verschieden sein muss, so dass eine die Dispergierbarkeit der Kunststoffe auf Polyisocyanat-Basis gewährleistende Menge an hydrophilen Zentren vorliegt. Es ist hierbei weitgehend unerheblich, ob die hydrophilen Zentren über die Aufbaukomponente a), c) oder d) oder über mehrere dieser Komponenten in die Verfahrensprodukte eingebaut worden sind. Im Falle der Herstellung der Kunststoffe auf Polyisocyanat-Basis in Abwesenheit von Dispergierwasser erfolgt die Durchführung des erfindungsgemässen Verfahrens vorzugsweise in Gegenwart eines hydrophilen Lösungsmittels wie beispielsweise N-Methylpyrrolidon, Dioxan oder Aceton, worauf die Herstellung der wässrigen Dispersion durch Vermischen der so erhaltenen Lösung der erfindungsgemässen Verfahrensprodukte mit Wasser erfolgt, wobei gegebenenfalls vorliegende leicht flüchtige Lösungsmittel wie Aceton gewünschtenfalls destillativ nach der Durchmischung mit Wasser entfernt werden können. Bei der Herstellung von wässrigen Dispersionen ist es auch möglich, beispielsweise ein hydrophobes NCO-Prepolymer der beispielhaft genannten Art mit einem hydrophil modifizierten NCO-Prepolymer der beispielhaft genannten Art zu vermischen, so dass die Gesamtmenge an hydrophilen Gruppierungen des Gemischs den oben gemachten Angaben entsprechen, und anschliessend das Gemisch durch Umsetzung mit der Komponente c) in das Endprodukt zu überführen.

Gemäss einer ersten bevorzugten Variante der Herstellung von wässrigen Dispersionen der erfindungsgemässen Verfahrensprodukte erfolgt die Kettenverlängerungsreaktion des aus den Komponenten a), b) und gegebenenfalls d) hergestellten, gegebenenfalls hydrophil modifizierten NCO-Prepolymeren durch dessen Umsetzung mit wässrigen Lösungen von gegebenenfalls ionische Zentren aufweisenden Diaminen der oben beispielhaft genannten Art oder mit Hydrazinen der oben beispielhaft genannten Art, wobei man die NCO-Prepolymeren entweder als Schmelze oder in Form von Lösungen in Lösungsmitteln der zuletzt beispielhaft genannten Art mit den wässrigen Lösungen der Kettenverlängerungsmittel c) vereinigt.

Gemäss einer zweiten bevorzugten Variante der Herstellung von wässrigen Dispersionen der erfindungsgemässen Verfahrensprodukte werden die aus den Komponenten a), b) und gegebenenfalls d) hergestellten, hydrophil modifizierten NCO-Prepolymeren in Analogie zu den Verfahrensweisen der DE-OS 2 725 589 bzw. der US-Patentschriften 4 269 748, 4 192 937 oder 4 292 226 mit zumindest teilweise blockierten Diaminen bzw. Hydrazinen in Abwesenheit von Wasser vermischt und anschliessend das so erhaltene Gemisch mit Wasser vermischt.

Grundsätzlich ist es auch möglich, bei der Herstellung von wässrigen Dispersionen der erfindungsgemässen Verfahrensprodukte externe Emulgatoren wie z.B. Alkalisalze von langkettigen Fettsäuren oder langkettigen Alkansulfonsäuren oder ethoxylierte Alkylbenzole mit einem mittleren Molekulargewicht von 300 bis 3000 anstelle oder gleichzeitig mit den eingebauten hydrophilen Zentren mitzuverwenden. Diese externen Emulgatoren werden hierbei zweckmässigerweise den NCO-Prepolymeren vor deren Kettenverlängerung einverleibt. Der Einsatz derartiger externer Emulgatoren ist jedoch gegenüber dem Einsatz von eingebauten hydrophilen Zentren weniger bevorzugt.

Bei der Herstellung von wässrigen Dispersionen der erfindungsgemässen Verfahrensprodukte wird die Menge des Wassers im allgemeinen so bemessen, dass 10- bis 60-, vorzugsweise 20- bis 50-gew.-%ige Dispersionen anfallen. Die so erhaltenen Dispersionen können mit den üblichen Hilfs- und Zusatzmitteln zersetzt und für alle üblichen Einsatzgebiete für wässrige Polyurethandispersionen verwendet werden.

Bei allen Varianten des erfindungsgemässen Verfahrens erfolgt die Kettenverlängerungsreaktion vorzugsweise bei Raumtemperatur oder mässig erhöhter Temperatur, d.h. im Temperaturbereich von 15 °C bis 60 °C.

In den nachfolgenden Beispielen beziehen sich alle Prozentangaben auf Gewichtsprozente.

In den nachfolgenden Beispielen wurden folgende Aufbaukomponenten a) verwendet:

1. Polyester A

Hergestellt aus Hexandiol, Neopentylglykol und Adipinsäure im Molverhältnis 4,4:2,4:7,8 vom Molekulargewicht 1598; die Säurezahl beträgt 69,5, die Viskosität bei 75 °C 730 mPa·s.

2. Polyester B

Hergestellt aus 1,4-Butandiol, 1,6-Hexandiol und Adipinsäure vom Molekulargewicht 960; die Säurezahl beträgt 114,1, die Viskosität bei 75 °C 320 mPa·s.

3. Polyether A

Hergestellt aus Polypropylenglykol (Molekulargewicht 2000) und Bernsteinsäureanhydrid im Molverhältnis 1:2. Die Säurezahl beträgt 50,4, das Molekulargewicht 2222.

4. Polyether B

Hergestellt aus Polypropylenglykol (Molekulargewicht 1000) und Bernsteinsäureanhydrid im Molverhältnis 1:2. Die Säurezahl beträgt 90, das Molekulargewicht 1244.

Als Aufbaukomponente d) wurde folgender Polyether verwendet:

Polyether C

Hergestellt aus einem Mol auf n-Butanol gestartetem monofunktionellen Polyethylenoxidpolyether vom Molekulargewicht 1145 und einem Mol Bernsteinsäureanhydrid bei 120 °C im Verlauf von 5 Stunden mit anschliessender Vakuumentgasung. Gehalt an Ethylenoxid: 86,1%.

Beispiel 1

200 g (0,13 Mol) Polyester A werden in einem 1 l Reaktionsgefäss 30 min bei 100–110 °C und einem Vakuum von 18 mbar entwässert. Nach Abkühlen auf 80 °C setzt man unter Stickstoff 81,74 g (0,312 Mol) 4,4'-Diisocyanatodicyclohexylmethan (Desmodur® W der Bayer AG, Leverkusen) zu und taucht das Reaktionsgefäss unter Rühren in ein auf 160 °C vorgeheiztes Ölbad. Beim Erreichen einer Innentemperatur von ca. 140 °C beginnt eine lebhafte $CO_2$-Abspaltung. Das Gasvolumen wird mit einer Gasuhr gemessen. Nach insgesamt 4,5 Stunden sind 5,82 l (0,26 Mol), das entspricht 100% der Theorie, $CO_2$ abgespalten worden. Man kühlt auf Raumtemperatur ab und erhält eine klare, hochviskose Schmelze ($\eta_{23\,°C}$ = 320 000 mPa·s) vom NCO-Gehalt 5,3% (ber. 5,65%). Das Produkt ist in Estern, Ethern und Ketonen leicht löslich. Nach 12 Wochen Lagerung bei Raumtemperatur ist der NCO-Gehalt geringfügig auf 5,2% gefallen. Das NCO-Prepolymer eignet sich zur Herstellung von, unter dem Einfluss von Luftfeuchtigkeit aushärtenden, Beschichtungen. Hierzu wird das NCO-Prepolymer bzw. seine Lösung vorzugsweise mit einem, die Kettenverlängerungsreaktion mit Wasser be-

schleunigenden Katalysator wie z.B. Dibutylzinndilaurat, versetzt und auf das zu beschichtende Substrat aufgetragen.

Beispiel 2

Man wiederholt Beispiel 1 unter völlig gleichen Bedingungen, setzt jedoch der Reaktionsmischung 0,2 g (1000 ppm) Natriummethylat zu. In diesem Fall erhält man bereits nach 85 Minuten das theoretische Volumen an $CO_2$. Der NCO-Gehalt beträgt 5,1%, die Viskosität $\eta_{25°C}$ = 250 000 mPa·s. Die Reaktionsgeschwindigkeit wurde also durch 100 ppm Natriummethylat um einen Faktor >3 beschleunigt. Das Produkt besitzt identische Lösungseigenschaften und ist ebenso wie das Produkt gemäss Beispiel 1 zur Herstellung von, unter dem Einfluss von Luftfeuchtigkeit aushärtbaren, Beschichtungen geeignet.

Beispiel 3

Unter den in Beispiel 1 beschriebenen Reaktionsbedingungen werden 400 g (0,26 Mol) Polyester A mit 152,7 g (0,583 Mol) Desmodur® W in Gegenwart von 500 ppm Natriummethylat (bezogen auf den Polyester) umgesetzt. Nach 90 Minuten war das theoretische Volumen $CO_2$ (11,6 l) abgespalten. Der NCO-Gehalt beträgt 4,6% (ber. 5,1%). Die klare, blassgelbe Schmelze wird 50%ig in Aceton eingelöst. Man erhält eine wasserdünne klare Lösung, welche nach Zusatz von Dibutylzinndilaurat zur Herstellung von, unter dem Einfluss von Luftfeuchtigkeit aushärtenden, Beschichtungen eingesetzt werden kann.

Beispiel 4

Völlig analog zu Beispiel 3 stellt man ein Urethangruppen-freies NCO-Prepolymer her aus:

200 g (0,125 Mol) Polyester A
65,5 g (0,250 Mol) Desmodur® W
250 ppm Blei-octoat.

Nach 2 Stunden bei 160 °C löst man 70%ig in getrocknetem Tetrahydrofuran. NCO-Gehalt: ber. 4,12%, gef. 4,13% (bezogen auf Feststoff). Die klare Lösung ist mindestens 3 Monate lagerstabil und kann ebenso wie die Lösungen der vorhergehenden Beispiele zur Herstellung von, unter dem Einfluss von Luftfeuchtigkeit aushärtenden, Beschichtungen eingesetzt werden.

Beispiel 5

Völlig analog zu Beispiel 1 werden 200 g Polyester A (0,13 Mol) mit 69,3 g (0,312 Mol) Isophorondiisocyanat in Gegenwart von 1000 ppm Natriummethylat umgesetzt. Nach 90 Minuten ist 100% der Theorie an $CO_2$ entstanden. Die klare, gelbliche Schmelze wird abgekühlt ($\eta_{23°C}$ = 410 000 mPa·s) und der NCO-Gehalt zu 4,5% bestimmt. Das NCO-Prepolymer kann ebenfalls als Bindemittel von, unter dem Einfluss von Luftfeuchtigkeit aushärtenden, Beschichtungsmitteln eingesetzt werden.

Beispiel 6 (Vergleichsbeispiel)

Die nachfolgenden Vergleichsbeispiele 6a, 6b und 6c belegen, dass aromatische Diisocyanate wegen unerwünschter Nebenreaktionen erfindungsgemäss ungeeignet sind.

a) Unter den Reaktionsbedingungen von Beispiel 1 werden 200 g Polyester A mit 51 g (0,293 Mol) 2,4-Diisocyanatotoluol umgesetzt. Nach insgesamt 3,5 Stunden sind lediglich 80% der Theorie (4,7 l) $CO_2$ freigesetzt, das Produkt ist jedoch völlig vernetzt. Es ist in Aceton, Tetrahydrofuran und Essigsäureethylester unlöslich.

b) Wiederholt man diesen Versuch in Gegenwart von 1000 ppm Natriummethylat, so vernetzt der Ansatz bereits nach 20 Minuten, wobei lediglich 67% der Theorie (3,9 l) $CO_2$ gemessen werden.

Weil die Katalyse nicht zum erwünschten Ergebnis führte, wurde in Beispiel 6c das Diisocyanat desaktiviert.

c) Man wiederholt das Vergleichsbeispiel 6a, verwendet jedoch mit 175 ppm Chlorwasserstoff desaktiviertes Diisocyanatotoluol. Nach 2,5 Stunden erhält man lediglich 65% der Theorie (3,8 l) $CO_2$, wobei das Produkt bereits voller Gelpartikel ist und in Aceton unlöslich wurde. NCO-Gehalt 5,6%, berechnet 5,7%.

Beispiel 7 (Vergleichsbeispiel)

Die nachfolgenden Beispiele 7a und 7b belegen die Sonderstellung der cycloaliphatischen Diisocyanate, da sie aufzeigen, dass auch 1,6-Diisocyanato-hexan für das erfindungsgemässe Verfahren ungeeignet ist:

a) Setzt man 800 g (0,52 Mol) Polyester A mit 156,3 g (0,93 Mol) 1,6-Diisocyanato-hexan um, so erhält man bei 140–160 °C nach 35 Minuten lediglich 70% der Theorie (16 l) $CO_2$, wobei das Produkt bereits völlig vernetzt und unlöslich geworden ist.

b) Wiederholt man diesen Versuch mit 200 g (0,13 Mol) Polyester A und 49,14 g (0,293 Mol) 1,6-Diisocyanato-hexan in Gegenwart von 1000 ppm p- Toluolsulfonsäure- methylester (Desaktivierung), so erhält man nach 100 Minuten ein völlig vernetztes Produkt, obwohl lediglich 74% der Theorie (4,3 l) $CO_2$ abgespalten wurde. Das Produkt ist in Tetrahydrofuran bzw. in Aceton unlöslich.

Beispiele 8–16

Die folgenden Beispiele zeigen die Vielfalt der möglichen Katalysatoren auf.

Jeweils 200 g (0,125 Mol) entwässerter Polyester A werden bei ca. 70 °C mit 62,4 g (0,281 Mol) IPDI und dem jeweiligen Katalysator versetzt und in ein auf 160 °C vorgeheiztes Bad gesenkt. Nach Beendigung der $CO_2$-Abspaltung wird das Gasvolumen gemessen, die viskose Schmelze auf ca. 80 °C abgekühlt und 70%ig in einem organischen Lösungsmittel gelöst. Vorher wird der NCO-Gehalt ermittelt.

Die Ergebnisse sind in Tabelle I zusammengefasst.

Tabelle I

| Bei-spiel | Katalysator | % d.Th. $CO_2$ | Zeit [h] | NCO [%] | 70%ige Lösung | |
|---|---|---|---|---|---|---|
| 8 | Natriummethylat[1] | 100 | 1,0 | 4,6 | optisch klar | (Aceton) |
| 9 | Natriumphenolat[1] | 95 | 2,2 | 5,1 | do. | (Aceton) |
| 10 | Dibutylzinndilaurat[1] | 98 | 2,2 | 5,0 | do. | (Aceton) |
| 11 | Lithiummetall[2] | 100 | 2,5 | 5,3 | do. | (Aceton) |
| 12 | Lithiummethylat[1] | 95 | 1,5 | 4,6 | do. | (Aceton) |
| 13 | Lithium-tert.-butylat[1] | 100 | 2,3 | 4,6 | do. | (Essigester) |
| 14 | Blei-octoat[1] | 99 | 2,2 | 4,9 | do. | (Tetrahydrofuran) |
| 15 | Nickeloleat[1] | 97 | 1,8 | 4,4 | do. | (Methyl-ethylketon) |
| 16 | – | 95 | 6,5 | 5,1 | do. | (Aceton) |

[1] 250 ppm, bezogen auf Gesamtgemisch
[2] 500 ppm, bezogen auf Gesamtgemisch

Beispiel 17–18

Man arbeitet völlig analog Beispiel 1.

Ansatz:

| Bsp. | Polyester A | Katalysator[1] | Diiso-[2] cyanat | $CO_2$ % d.Th. | NCO [%] | Zeit [h] |
|---|---|---|---|---|---|---|
| 17 | 200 g | Zinn-II-octoat | 73,6 | 100 | 4,66 | 1,5 |
| 18 | 200 g | DABCO | 73,6 | 98 | 4,75 | 1,5 |

[1] 250 ppm, bezogen auf Gesamtgemisch
[2] 4,4'-Diisocyanatodicyclohexylmethan

Beispiel 19

400 g (0,322 Mol) Polyether B werden entwässert und mit 1000 ppm IONOL und 250 ppm Natriummethylat versetzt. Dazu fügt man bei 80 °C 161 g (0,725 Mol) Isophorondiisocyanat hinzu und erwärmt schnell auf 140 °C. Beim Erreichen von 120 °C wird bereits lebhafte $CO_2$-Abspaltung beobachtet. Nach 3 Stunden ist die Abspaltung (100% der Theorie) beendet. Der NCO-Gehalt beträgt 5,4%; das Produkt löst sich klar in Aceton und ist zur Herstellung, unter dem Einfluss von Luftfeuchtigkeit aushärtenden, Beschichtungen geeignet.

Beispiel 20

Beispiel 19 wird wiederholt jedoch nunmehr mit 200 g (0,090 Mol) Polyether A und 45,1 g (0,203 Mol) Isophorondiisocyanat. Die $CO_2$-Abspaltung ist bei 135 °C Innentemperatur nach 1 Stunde beendet. Der NCO-Gehalt beträgt 3,65%; das Produkt ist in Aceton, Essigester, Dioxan, Tetrahydrofuran und Methyl-ethyl-keton klar löslich und ist zur Herstellung, unter dem Einfluss von Luftfeuchtigkeit aushärtenden, Beschichtungen geeignet.

Beispiel 21

500 g einer 50%igen Lösung eines NCO-Prepolymeren in Aceton gemäss Beispiel 3 werden mit weiteren 325 ml Aceton verdünnt und bei 50 °C mit einer Mischung aus 2,95 g (0,059 Mol) Hydrazinhydrat und 13,5 g (0,036 Mol) einer 51%igen wässrigen Lösung des Natriumsalzes der N-Aminoethyl-2-amino- ethansulfonsäure in 50 g Wasser versetzt.

Nach 5 Minuten dispergiert man durch Zutropfen von 375 ml entsalztem Wasser und destilliert das Aceton im Wasserstrahlvakuum ab.

Man erhält eine feinteilige, wässrige Polyesterpolyamidpolyharnstoffdispersion die länger als 4 Monate lagerstabil ist.

| | |
|---|---|
| Feststoffgehalt: | 40,1% |
| pH-Wert: | 6,8 |
| % $SO_3^{\ominus}$: | 1,1 |
| Teilchengrösse: | 303 nm (Nanometer) |
| Auslaufviskosität: | 11,4 sec FB, Düse 4. |

Mit der Dispersion wird eine Glasplatte in einer Nassfilmstärke von 0,2 mm beschichtet. Die Beschichtung wird bei Raumtemperatur während 8 Stunden getrocknet und anschliessend während 20 Minuten auf 120 °C erhitzt. Man erhält so einen optisch klaren, flexiblen, hartelastischen Film. Die Dispersion ist insbesondere zur Beschichtung von Textilien oder zur Lederausrüstung geeignet.

Beispiel 22

407 g einer 50%igen Lösung des NCO-Prepolymeren gemäss Beispiel 5 werden, wie in Beispiel 21 beschrieben, mit 430 ml Aceton verdünnt, anschliessend mit einer Lösung von 2,6 g Hydrazinhydrat (0,051 Mol) und 15,74 g (0,042 Mol) des in Beispiel 21 genannten Diaminosulfonats in 50 ml Wasser kettenverlängert. Anschliessend wird die so erhaltene Lösung in 340 g salzfreiem Wasser dispergiert. Nach Abdestillieren des Acetons erhält man eine feinteilige wässrige Dispersion eines Polyester-Polyharnstoff-Polyamids, die länger als 4 Monate lagerstabil ist.

| | |
|---|---|
| Feststoffgehalt: | 43,5% |
| pH-Wert: | 6,9 |
| % $SO_3^{\ominus}$: | 1,3 |
| Teilchengrösse: | 195 nm |
| Auslaufviskosität: | 12,1 sec FB, Düse 4 |

Die Dispersion ist zentrifugenstabil (30 min/3000 UpM). Auf einer, mit der Dispersion gemäss Beispiel 21 beschichteten Glasplatte erhält man nach Trocknen an der Luft und anschliessendem Erhitzen auf 120 °C während 20 Minuten einen optisch klaren, hochflexiblen, elastischen Film. Die Dispersion ist zum Beschichten und Laminieren von beispielsweise Textil, Leder oder Glas geeignet.

Beispiel 23

Man wiederholt Beispiel 3 und löst die klare Schmelze 50%ig in Toluol/THF (im Verhältnis 1:1,33).

Zu einer Lösung von 10,05 g IPDA (0,0591 Mol) in 157 g Isopropanol und 94 g Toluol tropft man im Verlauf von ca. 2 Stunden eine Mischung aus 208,5 g obiger Prepolymerlösung mit 2,6 g Stearylisocyanat.

Man erhält einen physikalisch trocknenden, optisch klaren, lagerstabilen Polyester-polyharnstoff-polyamid-Lack.

Der Feststoffgehalt beträgt 24,84%, die Viskosität bei 25 °C 18 000 mPa·s.

Das Material ist zur Ausrüstung von Textilien und von Leder geeignet.

Beispiel 24

200 g (0,208 Mol) Polyester B werden entwässert und mit 103,9 g (0,468 Mol) IPDI und 250 ppm Bleioktoat versetzt und 2 Stunden bei 160 °C Badtemperatur umgesetzt. Die Schmelze wird 70%ig in Aceton gelöst, die Lösung ist klar und dünnflüssig.

Die Lösung wird mit einer Lösung von 26,2 g IPDA in 156 g Toluol und in 156 g Isopropanol verrührt. Der NCO-Gehalt der Lösung des vorverlängerten NCO-Prepolymeren liegt dann bei 1,5%. Mit der Lösung werden anschliessend Glasplatten beschichtet. Nach 2-tägiger Lagerung bei Raumtemperatur an der Luft erhält man optisch klare, zähelastische Filme, die eine ausgezeichnete Haftung auf Glas aufweisen.

Verwendet man anstelle von IPDA eine stöchiometrisch äquivalente Menge Hydrazinhydrat (7,71 g), so erhält man klare Filme ähnlicher Elastizität.

Beispiel 25

Teil 1

600 g (0,407 Mol) Polyester A werden 30 Min. bei 110–120 °C im Wasserstrahlvakuum entwässert. Bei 80 °C setzt man 240 g (0,916 Mol) Desmodur® W zu und katalysiert mit 75 mg (125 ppm) Natriummethylat. Bei 160 °C ist innerhalb 1 Std. das theor. Volumen an $CO_2$ (18,23 l) abgespalten. Das Prepolymer wird 80%ig in Dioxan gelöst. Der NCO-Gehalt der Lösung beträgt 4,06% (theor.: 4,26%).

Teil 2

304 g Sulfonatdiol (0,5 Mol) und 100 g (1 Mol) Bernsteinsäureanhydrid werden mit 0,3 g Lithium-tert.-butylat versetzt und 4 Stdn. bei 120–125 °C gerührt. Im IR-Spektrum ist die Anhydrid-Bande verschwunden.

Bei dem Sulfonatdiol handelt es sich um ein propoxyliertes Addukt aus 2-Butendiol-1,4 und Na $HSO_3$ vom Molekulargewicht 425. Das Produkt wird als 70%ige klare Lösung in Toluol eingesetzt, wobei das Toluol nach der Umsetzung mit dem Anhydrid destillativ im Vakuum entfernt wird.

Teil 3

100 g Polyether C (0,08 Mol) werden mit 200 g (0,245 Mol) des Produktes aus Teil 2 durchmischt.

Bei 75 °C setzt man 188,45 g (0,7193 Mol) Desmodur® W zu. Nach 2 Stdn. bei 120–125 °C ist die Reaktion abgelaufen (Kontrolle der $CO_2$ Menge) und man löst 80% in Dioxan. Der NCO-Gehalt der Lösung beträgt 6,56% (theor.: 6,54%). Der Ethylenoxid-Gehalt des Prepolymers beträgt 29% und der Sulfonatgehalt liegt bei 6,6%.

Teil 4

800 g vom Prepolymer Teil 1 werden mit 176,6 g des Prepolymeren Teil 3 bei 65–70 °C gut durchmischt und bei 70 °C mit 40,9 g (0,365 Mol) Acetonazin versetzt. Nach 8 Min. dispergiert man unter gutem Rühren mit einer Mischung aus 1171 ml Wasser, 6,6 g Diethylentriamin und 3,8 g ethoxyliertem Nonylphenol (NP 30, BAYER AG). Bei 60–70 °C wird 4 Stdn. nachgerührt, auf Raumtemperatur abgekühlt und von wenig grobteiligem Anteil abfiltriert. (400 μ Filter).

Daten der Dispersion:

| | |
|---|---|
| Feststoff | 35% |
| Gehalt an Ethylenoxid | 3,2%, |
| Sulfonatgehalt | 0,73%, |
| pH-Wert | 6,0. |

Wie oben beschrieben wurden Filme auf Glasplatten und Aluminiumfolie hergestellt und 5 Stdn. bei 120 °C getrocknet.

Man erhält einen hart-elastischen, leicht opaken Film der Shore A-Härte: 71.

**Patentansprüche**

1. Verfahren zur Herstellung von Kunststoffen auf Polyisocyanat-Basis nach dem Prepolymerverfahren durch Umsetzung von

a) mindestens zwei endständige, gegenüber Isocyanatgruppen reaktionsfähige Gruppen aufweisenden Verbindungen des Molekulargewichtsbereichs 146–10 000 mit

b) überschüssigen Mengen an organischen Polyisocyanaten zu den entsprechenden Isocyanatgruppen aufweisenden Voraddukten und deren anschliessende Umsetzung mit

c) Kettenverlängerungsmitteln, wobei die Herstellung der Voraddukte gegebenenfalls unter Mitverwendung von

d) bis zu 10 Äquivalentprozent, bezogen auf die in der Komponente a) vorliegenden, gegenüber Isocyanatgruppen reaktionsfähigen Gruppen, an, im Sinne der Isocyanat-Additionsreaktion monofunktionellen Verbindungen erfolgt, dadurch gekennzeichnet, dass man

als Aufbaukomponente a) im wesentlichen Hydroxylgruppen-freie, mindestens zwei endständige carboxylgruppen und gegebenenfalls Ether- und/oder Estergruppen aufweisende Verbindungen,

als Aufbaukomponente b) mindestens einen Cyclohexanring aufweisende nicht-aromatische Polyisocyanate mit ausschliesslich aliphatisch und/oder cycloaliphatisch gebundenen Isocyanatgruppen und

als Aufbaukomponente c) Wasser und/oder Polyamine mit mindestens zwei primären und/oder sekundären Aminogruppen und/oder Hydrazine mit mindestens zwei primären und/oder sekundären Aminogruppen verwendet.

2. Verfahren gemäss Anspruch 1, dadurch gekennzeichnet, dass die Aufbaukomponente b) mindestens eine cycloaliphatisch gebundene Isocyanatgruppe aufweist.

3. Ausführungsform des Verfahrens gemäss Anspruch 1 zur Herstellung von wässrigen Dispersionen von Isocyanat-Polyadditionsprodukten, dadurch gekennzeichnet, dass man

(i) als Aufbaukomponente a) ionische und/oder nicht-ionisch-hydrophile Gruppen aufweisende Verbindungen und/oder

(ii) als Aufbaukomponente c) ionische Gruppen aufweisende Polyamine und/oder

(iii) als Aufbaukomponente d) nicht-ionisch-hydrophile Verbindungen

in einer, die Dispergierbarkeit der Polyadditionsprodukte gewährleistenden, Menge mitverwendet, und wobei man entweder die Kettenverlängerung der Voraddukte in wässriger Phase durchführt oder man die in Abwesenheit von Wasser hergestellten Polyadditionsprodukte im Anschluss an ihre Herstellung in an sich bekannter Weise in Wasser dispergiert.

4. Verfahren gemäss Anspruch 3, dadurch gekennzeichnet, dass man als Aufbaukomponente c) diprimäre Diamine und/oder Hydrazin mit mindestens einer blockierten Aminogruppe, ausgewählt aus der Gruppe bestehend aus Ketiminen, Ketazinen, Oxazolidinen, Aldazinen, Aldiminen und Kohlensäuresalzen verwendet, wobei man die Aufbaukomponente c) mit dem aus den Komponenten a), b) und gegebenenfalls d) hergestellten, Isocyanatgruppen aufweisenden Voraddukt vermischt und anschliessend dieses Gemisch mit Wasser vermischt.

5. Verfahren gemäss Ansprüchen 1 bis 4, dadurch gekennzeichnet, dass man die Isocyanatgruppen aufweisenden Voraddukte durch Umsetzung der Komponente a) und gegebenenfalls der Komponente d) mit der Komponente b) unter Einhaltung eines Äquivalentverhältnisses zwischen Isocyanatgruppen und gegenüber Isocyanatgruppen reaktionsfähigen Gruppen von 1,4:1 bis 3:1 bei einer Temperatur von 130 bis 200 °C herstellt.

**Revendications**

1. Procédé pour préparer des matières plastiques à base de polyisocyanates selon le procédé passant par un prépolymère, par réaction:

a) de composés, ayant un intervalle du poids moléculaire de 146 à 10 000, présentant au moins deux groupes terminaux pouvant réagir avec des groupes isocyanates, avec

b) des quantités excédentaires de polyisocyanates organiques pour obtenir les prépolymères correspondants, présentant des groupes isocyanates, et leur réaction subséquente avec:

c) des agents d'allongement des chaînes, la préparation des prépolymères s'effectuant éventuellement avec utilisation concomittante de

d) jusqu'à 10 équivalents pour cent, par rapport aux groupes capables de réagir avec les groupes isocyanates et présents dans le composant a), de composés monofonctionnels dans le sens de la réaction d'addition de l'addition d'isocyanates, procédé caractérisé en ce que l'on utilise:

comme composant a) de synthèse des composés essentiellement dépourvus de groupes hydroxyles, présentant au moins deux groupes carboxyles terminaux et éventuellement des groupes éthers et/ou esters,

comme composant b) de synthèse des polyisocyanates non aromatiques présentant au moins un noyau cyclohexane et comportant des groupes isocyanates à liaison exclusivement aliphatique et/ou cycloaliphatique, et

comme composant c) de synthèse l'eau et/ou des polyamines comportant au moins deux groupes amino primaires et/ou secondaires et/ou des hydrazines comportant au moins deux groupes amino primaires et/ou secondaires.

2. Procédé selon la revendication 1, caractérisé en ce que le composant b) de synthèse présente au moins un groupe isocyanate fixé sur un groupe cycloaliphatique.

3. Forme de réalisation du procédé selon la revendication 1 pour produire des dispersions aqueuses de produits de polyaddition d'isocyanates, caractérisée en ce que l'on utilise:

(i) comme composants a) de synthèse des composés présentant des groupes ioniques et/ou des groupes non ioniquement hydrophiles, et/ou

(ii) comme composants c) de synthèse des polyamines présentant des groupes ioniques et/ou

(iii) comme composants d) de synthèse des composés non ioniquement hydrophiles,

en une quantité assurant la dispersabilité des produits de polyaddition et l'on effectue l'allongement des chaînes prépolymères en phase aqueuse ou bien après leur préparation, on disperse de façon connue dans de l'eau les produits de polyaddition préparés en l'absence d'eau.

4. Procédé selon la revendication 3, caractérisé en ce qu'on utilise comme composants c) de synthèse des diamines diprimaires et/ou de l'hydrazine comportant au moins un groupe amino bloqué, choisie dans l'ensemble constitué par des cétimines, des cétazines, des oxazolidines, des aldazines, des aldimines et des sels de l'acide carbonique, et l'on mélange le composant c) de synthèse avec le prépolymère présentant des groupes isocyanates et préparé à partir des composants a), b) et éventuellement d), et l'on mélange ensuite ce mélange avec de l'eau.

5. Procédé selon les revendications 1 à 4, caractérisé en ce qu'on produit les prépolymères, présentant des groupes isocyanates, par réaction du composant a) et éventuellement du composant d) avec le composant b) en maintenant, entre les groupes isocyanates et des groupes pouvant réagir avec des groupes isocyanates, un rapport entre équivalents allant entre 1,4:1 à 3:1, à une température de 130 à 200 °C.

## Claims

1. Process for the production of plastics based on polyisocyanates by the prepolymer process by the reaction of

a) compounds which have a molecular weight in the range 146–10,000 and contain at least two terminal groups which are reactive towards isocyanate groups with

b) excess quantities of organic polyisocyanates to give the corresponding preadducts containing isocyanate groups, and the subsequent reaction thereof with

c) chain-lengthening agents, the pre-adducts optionally being produced with the simultaneous use of

d) up to 10 equivalent %, based on the groups present in component a) which are reactive towards isocyanate groups, of compounds which are monofunctional with respect to the isocyanate addition reaction,

characterised in that compounds which contain at least two terminal carboxyl groups and optionally ether and/or ester groups and are substantially free from hydroxyl groups are used as synthesising component a),

non-aromatic polyisocyanates which contain at least one cyclohexane ring and isocyanate groups which are exclusively aliphatically and/or cycloaliphatically bound are used as synthesising component b) and

water and/or polyamines containing at least two primary and/or secondary amino groups and/or hydrazines containing at least two primary and/or secondary amino groups are used as synthesising component c).

2. Process according to Claim 1, characterised in that the synthesising component b) contains at least one cycloaliphatically bound isocyanate group.

3. Embodiment of the process according to Claim 1 for the production of aqueous dispersions of isocyanate polyaddition products, characterised in that

(i) compounds containing ionic and/or non-ionic-hydrophilic groups are simultaneously used as synthesising component a) and/or

(ii) polyamines containing ionic groups are simultaneously used as synthesising component c) and/or

(iii) non-ionic-hydrophilic compounds are simultaneously used as synthesising component d)

in a quantity which ensures the dispersibility of the polyaddition products, and either the chain-lengthening of the pre-adducts is carried out in the aqueous phase or the polyaddition products produced in the absence of water are dispersed in water in a manner known per se following their production.

4. Process according to Claim 3, characterised in that diprimary diamines and/or hydrazine containing at least one blocked amino group, selected from the group consisting of ketimines, ketazines, oxazolidines, aldazines, aldimines and carbonates are used as synthesising component c), the latter being mixed with the pre-adduct containing isocyanate groups and produced from components a), b) and optionally d) and this mixture being then mixed with water.

5. Process according to Claims 1 to 4, characterised in that the pre-adducts containing isocyanate groups are produced by reacting component a) and optionally component d) with component b) while observing an equivalent ratio between isocyanate groups and groups reactive towards isocyanate groups of 1.4:1 to 3:1, at a temperature of 130 to 200 °C.